# EUROPÄISCHE PATENTSCHRIFT

(11) **EP 2 269 320 B1**
(45) Veröffentlichungstag und Bekanntmachung des Hinweises auf die Patenterteilung: **06.01.2016**
(21) Anmeldenummer: 08736535.9
(22) Anmeldetag: 24.04.2008
(51) Int. Cl.: H04B 3/54, H04W 40/22, H04L 12/703, H04L 12/803, H04W 40/32

(54) **VERFAHREN UND VORRICHTUNG ZUR DATENVERARBEITUNG SOWIE SYSTEM UMFASSEND DIE VORRICHTUNG**
METHOD AND DEVICE FOR DATA PROCESSING AND SYSTEM COMPRISING SAID DEVICE
PROCÉDÉ ET DISPOSITIF DE TRAITEMENT DE DONNÉES ET SYSTÈME COMPORTANT LE DISPOSITIF

(43) Veröffentlichungstag der Anmeldung: 05.01.2011
(73) Patentinhaber: Siemens Aktiengesellschaft, 80333 München (DE)
(72) Erfinder: KUSSYK, Jaroslaw, 1170 Wien (AT)
(74) Vertreter: Maier, Daniel Oliver
(86) Internationale Anmeldenummer: PCT/EP2008/054994
(87) Internationale Veröffentlichungsnummer: WO 2009/129853

(56) Entgegenhaltungen:
- WO-A-2008/011533
- YONGGYU KIM ET AL: "Load-balanced Mesh Portal Selection in Wireless Mesh Network" MILITARY COMMUNICATIONS CONFERENCE, 2007. MILCOM 2007. IEEE, IEEE, PISCATAWAY, NJ, USA, 29. Oktober 2007 (2007-10-29), Seiten 1-6, XP031232557 ISBN: 978-1-4244-1512-0
- ABDELFATTEH HAIDINE ET AL: "Solving the generalized base station placement problem in the planning of Broadband Power Line Communications access networks" ACCESS NETWORKS&WORKSHOPS, 2007. ACCESSNETS '07. SECOND INTER NATIONAL CONFERENCE ON, IEEE, PI, 1. August 2007 (2007-08-01), Seiten 1-8, XP031212403 ISBN: 978-1-4244-1149-8

## Beschreibung

Die Erfindung betrifft ein Verfahren und eine Vorrichtung zur Datenverarbeitung sowie ein System umfassend eine derartige Vorrichtung.

Energieverteilnetze führen zu elektromagnetischen Feldern, die insbesondere in Gebäuden oder in dicht bebauten Gebieten DLC-Netzwerke (DLC = distribution line carrier/communication) bzw. Funknetzwerke stören. Eine solche Störung wirkt dynamisch auf das Kommunikationsmedium und kann einen wiederkehrenden und/oder einen fortschreitenden Charakter haben.

Um einen flächendeckenden Einsatz des Kommunikationsmediums sowie eine Skalierbarkeit des Kommunikationsmediums bei einer sukzessiven Erschließung unterschiedlicher Gebiete zu ermöglichen, werden zellulare Netzwerktopologien eingesetzt.

Derartige unterschiedliche Gebiete umfassen beispielsweise eine große Anzahl von Energieverbrauchzählern, diverse Sensoren, Lastschalt-, Automatisierungs- und/oder andere Geräten bzw. Vorrichtungen.

Vorzugsweise kann das Kommunikationsmediums mittels einer Kanalmultiplextechnik in mehrere (logische) Kanäle unterteilt werden, die einzeln und/oder gruppiert unterschiedlichen Netzwerkzellen zugeordnet und nach Möglichkeit wieder verwendet werden können.

Die zellulare Netzwerkstruktur wird zumeist von Basis- und/oder Zentralstationen kontrolliert, die in einzelnen Netzwerkzellen vorgesehen sind und dort den Datenverkehr regeln. Die Kommunikation zwischen der Basisstation und anderen Netzstationen einer Netzwerkzelle findet entweder direkt oder über mehrere Übertragungsabschnitte oder Übertragungsschritte (sog. Hops) statt.

Die Basisstationen sind vorzugsweise weiterhin an ein Backbone-Netzwerk angeschlossen, das eine Kommunikation der Basisstationen untereinander und/oder mit weiteren Backbone-Netzwerkstationen ermöglicht, wie z.B. in Y. Kim, "Load-balanced Mesh Portal Selection in Wireless Mesh Network", XP 31232557, offenbart.

Verändert sich beispielsweise die Struktur beim Übertragungsmedium (z.B. anhand einer baulichen Maßnahme in einer Funkzelle), so sollte die Netzplanung zumindest lokal überprüft bzw. erneut durchgeführt werden.

Besonders in Energieverteilnetzen ist die Häufigkeit derartiger Änderungen des Übertragungsmediums verhältnismäßig hoch. So kann z.B. eine Zusammenschaltung mehrerer Netzgruppen bzw. ihre Topologien das Ergebnis eines Lastausgleichs sein oder bei Service-Arbeiten wiederholt geändert werden.

Eine Berücksichtigung aller möglichen Schaltzustände in einem Energieverteilnetz ist im Rahmen der Netzplanung schwierig bis unmöglich.

Die **Aufgabe** der Erfindung besteht darin, die vorstehend genannten Nachteile zu vermeiden und insbesondere einen Ansatz zu schaffen, der in der Lage ist, die Veränderungen in einem Übertragungsmedium geeignet zu nutzen und darauf basierend die Funktionsfähigkeit des Kommunikationsnetzes ohne bzw. mit lediglich geringen Beeinträchtigungen aufrecht zu erhalten.

Diese Aufgabe wird gemäß den Merkmalen der unabhängigen Patentansprüche gelöst. Weiterbildungen der Erfindung ergeben sich auch aus den abhängigen Ansprüchen.

Zur Lösung der Aufgabe wird ein Verfahren zur Datenverarbeitung in einem Netzwerk angegeben,
- bei dem das Netzwerk eine Basisstation und mindestens einen Knoten umfasst,
- bei dem der mindestens eine Knoten eine Relay-Funktionalität aufweist,
- bei dem das Netzwerk adaptiert wird, indem dynamisch während des Betriebs Knoten mit der Basisstation direkt oder indirekt über mindestens einen weiteren Knoten verbunden und/oder getrennt werden.

Hierbei sei angemerkt, dass es sich bei der Basisstation auch um einen Knoten handeln kann, der insbesondere über einen Anschluss bzw. eine Anschlussmöglichkeit zu einem Backbone-Netzwerk verfügt.

Insoweit eignet sich der mindestens eine Knoten vorteilhaft dazu, Daten an mindestens einen weiteren Knoten weiterzuleiten. Dieser mindestens eine weitere Knoten ist somit indirekt mit der Basisstation verbunden. Insbesondere kann ein Knoten mit der Basisstation über mehrere weitere Knoten verbunden sein.

Der hier vorgestellte Ansatz ermöglicht eine hierarchische Organisation von Komponenten eines Netzwerks (Basisstation und Knoten, letztere werden auch als Netzwerkstationen bezeichnet). Vorteilhaft bilden die mit einer Basisstation verbundenen bzw. mit dieser Basisstation assoziierten Knoten zusammen mit der Basisstation eine Netzwerkzelle. Die Basisstation selbst weist vorzugsweise eine Verbindung zu einem Backbone-Netzwerk auf.

Vorzugsweise bestimmen die Knoten die Größe der Netzwerkzelle. Insbesondere durch die Anzahl der Knoten, die bei Bedarf eine Relay-Funktionalität aufweisen, kann sich die Größe der Netzwerkzelle ergeben. Diese Größe kann im Laufe des Betriebs Schwankungen unterliegen, d.h. die Netzwerkzelle kann sich je nach Anforderung oder Gegebenheit ausdehnen oder verkleinern.

Insbesondere ist eine Kommunikation zwischen Basisstationen auch direkt bzw. über mindestens einen Knoten möglich.

Eine Netzwerkzelle kann auch logisch und/oder physikalisch separat von anderen Netzwerkzellen ausgeführt sein.

Vorteilhaft ermöglicht der hier vorgestellte Ansatz eine effiziente Organisation des Netzwerks, insbesondere der der Basisstation zugeordneten Knoten z.B. während des Betriebs des Netzwerks. Beispielsweise kann ein weiterer Knoten zu der Netzwerkzelle hinzukommen oder ein existierender Knoten wegfallen. Auch ist es möglich, dass das Netzwerk mehrere Netzwerkzellen umfasst, wobei die mehreren Netzwerkzellen gegenseitig Daten von den jeweils anderen Netzwerkzellen (z.B. zu bzw. von dem Backbone-Netzwerk) weiterleiten können falls z.B. eine Basisstation oder deren Anbindung zu einem Backbone-Netzwerk gestört ist.

Insoweit können sich die Netzwerkzellen vergrößern, verkleinern, im Extremfall sogar wegfallen (bei Entfernen oder längerfristigem Ausfall einer Basisstation). Die Dynamik der Infrastruktur und die Bandbreiten der Verbindungen in dem Netzwerk können vorteilhaft dazu genutzt werden, das Netzwerk umfassend mehrere Netzwerkzellen geeignet zu optimieren. Dies reduziert erheblich einen zentralen Aufwand zur Netzwerkverwaltung.

Hierbei sei angemerkt, dass die Basisstation eine Funktionalität einer Zentrale in der Netzwerkzelle aufweisen kann. Insbesondere kann die Basisstation statisch oder beweglich ausgeführt sein.

Eine Routing-Funktionalität kann in der Basisstation vorgesehen sein. Auch kann die Routing-Funktionalität auf mindestens einen Knoten der Netzwerkzelle verteilt sein; insbesondere können mehrere Knoten ggf. in Kombination mit der Basisstation ein Routing ermöglichen.

Als Netzwerke eignen sich drahtgebundene sowie drahtlose Netzwerke, insbesondere Kombinationen derselben. Insbesondere kann das Netzwerk ein sogenanntes Gleichwellennetz umfassen.

Bei der Anbindung einer großen Anzahl von Energieverbrauchszählern, Sensoren, Lastschaltgeräten, Automatisierungsgeräten und/oder anderen Geräten bzw. Vorrichtungen an eine oder mehrere Zentrale(n) bzw. Basisstation(en) können drahtlose oder leitungsgebundene Informationsübertragungssysteme eingesetzt werden, die insbesondere ein Gleichwellennetz(werk) (engl.: "single frequency network") umfassen.

In einem solchen Gleichwellennetz wird eine Dateneinheit oder ein Datentelegramm (auch bezeichnet als "Telegramm") von einem oder von mehreren Absendern in alle Richtungen zeitgleich und auf den gleichen Frequenzen übertragen. Empfängt ein Knoten (auch bezeichnet als Station oder Netzwerkstation) in dem Gleichwellennetz die Dateneinheit, wird diese entsprechend und bei Bedarf in mehreren Wiederaussendungsschritten bzw. -wellen über andere Stationen oder Knoten einem Ziel zugeführt.

Ein Vorteil der Gleichwellennetze ist es, dass das Routing (z.B. zum Zecke der Wegesuche oder Wartung) vereinfacht wird: So ermöglicht das Gleichwellennetz einen Übertragungsvorgang von einer Quelle (Quellstation) zu einem Ziel (Zielstation) - ggf. über mehrere Übertragungsabschnitte (auch bezeichnet als Hops) bzw. Zwischenstationen - lediglich durch eine Angabe der Adresse der Zielstation(en) und durch Angabe der Anzahl der Wiederaussendungen.

Hierbei ist es nicht entscheidend, welche Netzwerkstationen und/oder Netzwerknoten in welchen Teilen der Übertragungsstrecke(nabschnitte) eine Dateneinheit in Richtung Ziel weiterleiten. Dies ergibt sich aus dem Übertragungskanal sowie aus verschiedenen Konstellationen des Gleichwellennetzes.

Der vorliegende Ansatz ist anwendbar bei leitungsgebundenen oder drahtlosen Netzen, insbesondere bei Gleichwellennetzen, z.B. unter Ausnutzung einer Gleichwellenübertragungstechnik (Gleichwellenfunk bzw. Gleichwellenrelaisfunk).

Das hierin bezeichnete Gleichwellennetz umfasst mehrere Möglichkeiten zur Ausbreitung von Nachrichten bzw. Dateneinheiten zwischen mehreren Knoten. Mindestens ein Knoten sendet eine Dateneinheit zu mindestens einem weiteren Knoten. Demgemäß können mehrere Sender vorgesehen sein, die jeweils eine Dateneinheit zu einem oder mehreren Empfängern senden. Derartige mehrere Sender senden im wesentlichen gleichzeitig, d.h. insbesondere unter Einhaltung vorgegebener bzw. vorgebbarer zeitlicher Toleranzen, die Dateneinheit zu mindestens einem Empfänger. Hierbei sei angemerkt, dass die Sender nicht aufwändig miteinander synchronisiert werden müssen.

Weiterhin ist es möglich, dass ein Empfänger eine von dem Sender erhaltene Dateneinheit weitersendet, sobald er dazu in der Lage ist. Dabei ist es nicht nötig, dass die Dateneinheit vollständig empfangen wurde; ggf. kann eine Weiterleitung der Dateneinheit bereits initiiert werden, sobald lediglich ein Teil (z.B. eine Präambel) der Dateneinheit empfangen wurde.

Optional kann der Empfänger auch den Empfang der vollständigen Dateneinheit abwarten ehe er diese weiterleitet.

Insbesondere kann in dem Gleichwellennetz eine Dateneinheit von einem Knoten zu einem Zielknoten über einen oder mehrere Knoten übermittelt werden, wobei jeder der Knoten nach dem vorstehend erläuterten Prinzip die Dateneinheit weiterleitet. Die Ausbreitung bzw. Übermittlung der Dateneinheiten erfolgt somit über mehrere Übertragungsabschnitte bzw. in mehreren Übertragungsschritten (bzw. innerhalb mehrerer Hops).

Eine Weiterbildung ist es, dass der mindestens eine Knoten Daten an mindestens einen weiteren Knoten weiterleiten kann.

Eine andere Weiterbildung ist es, dass Daten über den mindestens einen Knoten an mindestens einen weiteren Knoten, der mit dem mindestens einen Knoten verbunden ist, weitergeleitet werden.

Insbesondere ist es eine Weiterbildung, dass der mindestens eine Knoten mit der Basisstation assoziiert ist.

Auch ist es eine Weiterbildung, dass der mindestens eine Knoten direkt mit der Basisstation oder indirekt über mindestens einen anderen Knoten mit der Basisstation assoziiert bzw. verbunden ist.

Ferner ist es eine Weiterbildung, dass das Netzwerk mehrere Basisstationen und eine Vielzahl von Knoten umfasst, wobei jeder Knoten mit einer Basisstation assoziiert und/oder verbunden ist.

Dementsprechend kann die Basisstation mit den ihr zugeordneten Knoten als eine Netzwerkzelle aufgefasst oder bezeichnet werden.

Im Rahmen einer zusätzlichen Weiterbildung ist die Basisstation mit einem Backbone-Netzwerk verbunden.

Eine nächste Weiterbildung besteht darin, dass bei einem Ausfall der Verbindung zwischen der Basisstation und dem Backbone-Netzwerk die mit der Basisstation assoziierten Knoten mit einer anderen Basisstation assoziiert bzw. verbunden werden.

Hierbei können die Knoten selbst nach einer neuen Verbindung zu einer Basisstation suchen bzw. diese Suche veranlassen oder die bisherige Basisstation kann den Knoten oder mindestens einer alternativen Basisstation anzeigen, dass die Verbindung zum Backbone-Netzwerk ausgefallen ist und die Knoten zumindest vorübergehend eine alternative Basisstation benötigen. Insbesondere können die Knoten der Netzwerkzelle in einem solchen Fall von unterschiedlichen Basisstationen versorgt werden.

Eine Ausgestaltung ist es, dass bei einem Ausfall der Basisstation die mit der Basisstation assoziierten Knoten mit einer anderen Basisstation assoziiert werden.

Entsprechend können bei einem Ausfall der Basisstation die Knoten der Netzwerkzelle zumindest vorübergehend zu anderen Basisstationen abwandern.

Eine alternative Ausführungsform besteht darin, dass ein Knoten, der mit einer anderen Basisstation assoziiert ist, zu einer vorherigen Basisstation bzw. zu dessen ursprünglicher Basisstation zurückkehrt.

Eine derartige Rückkehr kann insbesondere nach einer vorgegebenen Zeitdauer versucht bzw. initiiert werden.

Auch ist es eine Ausgestaltung, dass das Netzwerk adaptiert wird zur Lastverteilung und/oder bei einer Störung einer Komponente bzw. einer Verbindung oder durch eine Veränderung der Übertragungseigenschaften oder durch ein Umschalten einer Verbindung oder bei einer Überlastung des Netzwerks.

Eine Weiterbildung besteht darin, dass der mindestens eine Knoten eine Vermittlungsfunktionalität aufweist derart, dass Daten insbesondere von anderen und/oder über andere Knoten zu einer anderen Basisstation als der mit dem mindestens einen Knoten assoziierten Basisstation weitergeleitet werden.

Eine zusätzliche Ausgestaltung ist es, dass die Weiterleitung der Daten in einem oder in mehreren logischen und/oder physikalischen Kanälen auch parallel (insbesondere nacheinander, zyklisch und/oder überlappend) durchgeführt wird.

Auch ist es eine Ausführungsform, dass der mindestens eine Knoten neben der Kommunikation mit der eigenen Basisstation Nachrichten zwischen fremden und/oder benachbarten Basisstationen und den ihr zugeordneten Knoten mithört und insbesondere die hieraus gewonnene Information an die eigene Basisstation und/oder an die fremde Basisstation bzw. an die fremden Knoten weiterleitet.

Eine andere Ausgestaltung ist es, dass das Netzwerk ein Energieversorgungsnetzwerk umfasst.

Weiterhin wird zur Lösung der vorstehend genannten Aufgabe eine Vorrichtung angegeben zur Übertragung einer Dateneinheit umfassend eine Prozessoreinheit und/oder eine zumindest teilweise festverdrahtete oder logische Schaltungsanordnung, die derart eingerichtet ist, dass das Verfahren wie hierin beschrieben durchführbar ist.

Besagte Prozessoreinheit kann jede Art von Prozessor oder Rechner oder Computer mit entsprechend notwendiger Peripherie (Speicher, Input/Output-Schnittstellen, Ein-Ausgabe-Geräte, etc.) sein oder umfassen. Eine solche Prozessoreinheit kann insbesondere in einem Kommunikationsgerät vorgesehen sein, das insbesondere einen Sender, Empfänger (Receiver) oder einen Transceiver aufweist.

Weiterhin kann eine festverdrahtete oder logische Schaltungseinheit, z.B. ein FPGA oder ein ASIC oder eine sonstige integrierte Schaltung vorgesehen sein. Insbesondere können elektronische, elektromagnetische, akustische oder sonstige Elemente vorgesehen sein, um unterschiedliche Signale zu erkennen und/oder zu verarbeiten.

Insbesondere kann die Vorrichtung somit eine Einheit zur parallelen Verarbeitung von Signalen und/oder eine Einheit zur seriellen Verarbeitung von Signalen umfassen.

Die Vorrichtung kann umfassen oder ausgeführt sein als: Ein Messgerät, ein Diagnosegerät, ein Zähler, ein Informationsgewinnungsgerät, ein Regelungsgerät, ein Peilgerät und/oder ein entsprechendes System.

Die Vorrichtung kann in der Energietechnik eingesetzt werden.

Es ist möglich, dass das Signal unterschiedliche physikalische Größen umfasst:
- eine elektrische Größe,
- eine elektromechanische Größe,
- eine elektromagnetische Größe,
- eine akustische Größe,
- eine thermische Größe,
- eine mechanische (insbesondere eine hydraulische oder pneumatische) Größe,
- eine chemische Größe,
- eine optische Größe.

Auch Kombinationen aus den vorgenannten Größen sind als Signal(e) möglich.

Es ist eine Weiterbildung, dass die Vorrichtung ein Kommunikationsgerät ist, wobei das Kommunikationsgerät mit einem weiteren Kommunikationsgerät Signale über eine Kommunikationsverbindung, die zumindest teilweise ein Stromnetz umfasst, austauscht.

Eine andere Weiterbildung ist es, dass das Kommunikationsgerät mit einem Knoten des Netzwerks assoziiert ist oder einem solchen Knoten des Netzwerks entspricht.

Weiterhin wird zur Lösung der Aufgabe ein System angegeben umfassend eine Vorrichtung wie hierin beschrieben.

Ausführungsbeispiele der Erfindung werden nachfolgend anhand der Zeichnungen dargestellt und erläutert.

Es zeigen:
- Fig.1: eine Topologie eines zellularen Netzwerks umfassend mehrere Netzwerkzellen, wobei zwei Netzwerkzellen mit je einer Basisstation und mehreren Knoten dargestellt sind;
- Fig.2: eine Topologie aufbauend auf der Darstellung von Fig.1, wobei eine Umschaltung in dem Netzwerk gemäß Fig.1 zu einer Veränderung zweier dargestellter Netzwerkzellen führt.

Hiermit wird ein Ansatz geschaffen zum Einsatz von Kommunikationsnetzwerken mit dynamischen Zellen.

Ein Kommunikationsnetzwerk umfasst mehrere Netzwerkzellen, die nicht notwendigerweise statisch sind, sondern sich dynamisch entsprechend den Gegebenheiten des Übertragungsmediums verändern bzw. anpassen können.

Eine Netzwerkzelle umfasst mindestens einen Knoten (z.B. eine Netzwerkstation als eine Basisstation), wobei dem Knoten mindestens ein Übertragungskanal zugeordnet wird/ist. Diese Zuordnung kann durch einen Multiplexbetrieb (z.B. anhand eines statischen Zugriffs auf mindestens einen Zeitschlitz eines Kanals im Zeitmultiplex zur Vermeidung von Kollisionen) erfolgen.

Eine Kommunikation zwischen Basisstationen kann direkt, über mindestens einen anderen Knoten (z.B. über eine andere Basisstation) oder über mindestens ein eigenes Backbone-Netzwerk durchgeführt werden.

Die Kommunikation zu dem bzw. über das Backbone-Netzwerk kann über ein anderes Kommunikationsmedium erfolgen als die Kommunikation innerhalb der Netzwerkzellen. Beispielsweise kann eine Anbindung an das Backbone-Netzwerk anhand einer Funkverbindung oder anhand einer Festnetzverbindung (z.B. Ethernet, DSL, Digital Subscriber Line) erfolgen.

Über das Backbone-Netzwerk kann eine Kommunikation zwischen einzelnen Basisstationen und/oder mit anderen Knoten des Backbone-Netzwerk erfolgen.

Die Kommunikation zwischen der Basisstation und einem weiteren Knoten in einer Netzwerkzelle findet über mindestens einen der Basisstation zugeordneten Übertragungskanal entweder direkt oder über mindestens einen weiteren Knoten (d.h. über mindestens einen Hop) in der Netzwerkzelle statt.

Ein Knoten wird vorzugsweise einer Basisstation (d.h. einer Netzwerkzelle) zugeordnet. Wenn sich die Gegebenheiten des Kommunikationsmediums ändern, kann der Knoten selbsttätig den Übertragungskanal bzw. von seiner Basisstation zu einer anderen Basisstation (z.B. zu einer Basisstation einer benachbarten Netzwerkzelle) wechseln. Hieraus resultiert eine Veränderung betreffend den Verlauf der Grenze der Netzwerkzelle: Die vorherige Netzwerkzelle schrumpft wohingegen die benachbarte Netzwerkzelle wächst.

Vorzugsweise kann ein geeigneter Mechanismus vorgesehen sein, der ein Zurückwechseln des Knotens zu der vorherigen (insbesondere zu der ursprünglichen) Netzwerkzelle ermöglicht bzw. initiiert. Dies kann beispielsweise durch einen Timer realisiert sein, dessen Ablauf dem Knoten signalisiert, auszuprobieren, ob er zu der vorherigen Netzwerkzelle (d.h. der vorherigen Basisstation) zurückwechseln kann.

Der Wechsel eines Knotens von einer Netzwerkzelle zu einer anderen Netzwerkzelle kann auch durch bessere Übertragungsbedingungen (z.B. kürzere Reaktionszeiten, weniger Hops, höhere Übertragungsrate usw.) oder nach einem Ausfall der Basisstation initiiert werden. Insbesondere kann im Rahmen eines Datenflussausgleichs eine schlecht angebundene Netzwerkzelle (weitgehend) durch eine besser verbundene Basisstation verdrängt werden.

Vorzugsweise versucht der Knoten immer wieder in seine (ursprüngliche) Netzwerkzelle (d.h. zu der Basisstation der ursprünglichen Netzwerkzelle) zurückzukehren. Hierdurch kann gegebenenfalls eine zu starke Ausbreitung einer Netzwerkzelle verhindert werden.

Ein Knoten kann auch von einer Basisstation aufgefordert werden, in eine benachbarte Netzwerkzelle zu wechseln, insbesondere falls die Kommunikationsverbindung der bisherigen Basisstation zum Backbone-Netzwerk unterbrochen ist. So kann die Verfügbarkeit der Knoten in dem Netzwerk gewährleistet werden. Verliert eine Basisstation die Verbindung zu dem Backbone-Netzwerk bzw. bei einem Ausfall der Basisstation selbst, schrumpft bzw. schwindet die Netzwerkzelle dieser Basisstation bis auf die Basisstation zusammen.

Ein Knoten kann zumindest Daten (z.B. Datentelegramme) von den Stationen aus der eigener Netzwerkzelle und optional (auch gleichzeitig) Daten aus fremden bzw. benachbarten Netzwerkzellen weiterleiten. Insbesondere kann der Knoten parallel oder überlappend mehrere Kanäle unterstützen.

Dies resultiert in einer weitreichenden Überlappung mehrerer Netzwerkzellen und somit vorteilhaft in Rückfallpositionen für den Knoten (falls die Verbindung zu der Basisstation ausfällt).

Durch die Unterstützung mehrerer Übertragungskanäle pro Knoten ist der Knoten in der Lage, präventiv nach potenziellen und/oder nach alternativen Möglichkeiten zur Verbindung mit anderen Netzwerkzellen zu suchen, um bei einem (plötzlichen) Ausfall der aktuell zugeordneten Basisstation eine alternative Basisstation nutzen zu können und somit weiterhin in dem Kommunikationsnetzwerk erreichbar zu sein.

Insbesondere kann die Basisstation einem Knoten Informationen über alternative Basisstationen oder Übertragungskanäle übermitteln, in die sowohl in der selben Netzwerkzelle als auch in mindestens einer anderen Netzwerkzelle der Knoten wechseln kann. Alternativ kann der Knoten parallel (überlappend) mit derselben Basisstation und/oder mit mindestens einer anderen Basisstation (bzw. Netzwerkknoten) über mehrere Kanäle kommunizieren.

Die einzelnen Basisstationen des Netzwerks können sich untereinander Informationen übermitteln über Erreichbarkeit von ihnen jeweils zugeordneten Knoten. Diese Informationen können die Basisstationen wiederum den ihnen zugeordneten Knoten weiterleiten, damit die Knoten bei Bedarf selbsttätig (und vorzugsweise zielgerichtet) einen Wechsel zu einer anderen Netzwerkzelle und/oder zu einer anderen Basisstation initiieren und/oder durchführen können.

Diese Informationen der Netzwerkzellen sind entweder im voraus den Basisstationen bekannt gemacht oder werden ihnen während des Betriebs mitgeteilt. Alternativ können die Basisstationen derartige Informationen auch selbsttätig ermitteln bspw. durch unmittelbaren Empfang und Auswertung der Kommunikation der Knoten mit den Basisstationen. Insofern können die Knoten neben der Kommunikation mit der eigenen Basisstation Mitteilungen zwischen fremden und/oder benachbarten Basisstationen und den ihr zugeordneten Knoten mithören und die daraus gewonnenen Informationen an die eigene Basisstation und/oder an die fremde Basisstation bzw. an die fremden Knoten weiterleiten.

Durch eine Koordination der Basisstationen untereinander (z.B. über das Backbone-Netzwerk) kann bei einem Ausfall einer Verbindung zu einer Basisstation eine Suche nach Knoten dieser Basisstation von mindestens einer benachbarten Basisstation gestartet werden, um die Ausfallszeiten möglichst gering zu halten.

Auch kann durch die Basisstationen eine koordinierte Übergabe von Knoten von einer Netzwerkzelle zu einer anderen Netzwerkzelle mittels gezieltem Ab- bzw. Anmelden gesteuert werden. Dies ist beispielsweise vorteilhaft zur Optimierung eines Datenflusses zu und von mindestens einer Basisstation.

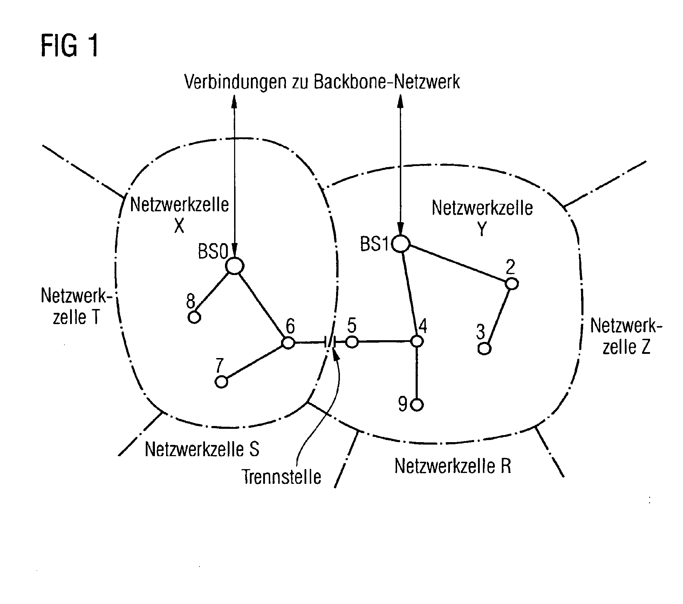

**Fig.1** zeigt beispielhaft eine Topologie eines zellularen Netzwerks umfassend Netzwerkzellen R, S, T, X, Y und Z. Die Netzwerkzellen X umfasst eine Basisstation BS0, die mit einem Knoten 8 und mit einem Knoten 6 verbunden ist, der Knoten 6 ist weiter verbunden mit einem Knoten 7. Die Netzwerkzelle Y umfasst eine Basisstation BS1, die mit einem Knoten 2 und einem Knoten 4 verbunden ist. Der Knoten 4 ist weiter verbunden mit einem Knoten 5 und mit einem Knoten 9, der Knoten 2 ist weiter verbunden mit einem Knoten 3.

Die Basisstationen BS0 und BS1 weisen jeweils eine Verbindung zu einem Backbone-Netzwerk auf.

Die Basisstation BS0 kommuniziert in der Netzwerkzelle X mit den Knoten 6 bis 8, die Basisstation BS1 kommuniziert in der Netzwerkzelle Y mit den Knoten 2 bis 5 und 9. Zwischen den Knoten 6 und 5 ist die Verbindung unterbrochen (dargestellt durch eine Trennstelle).

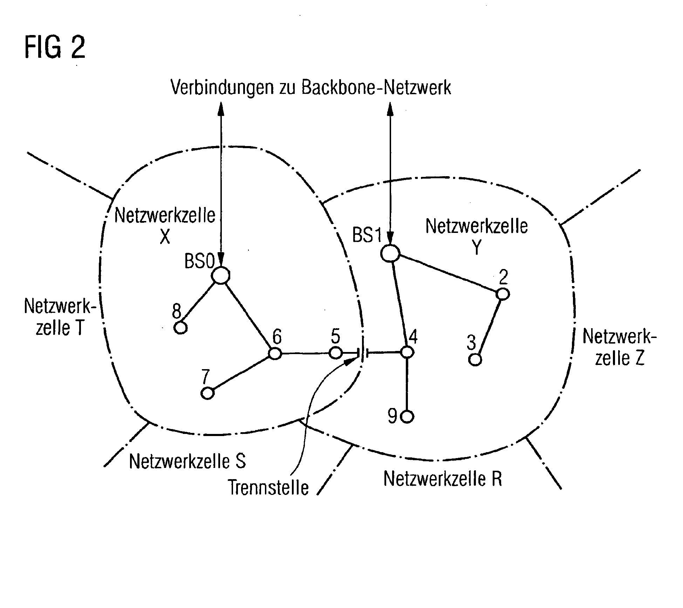

Nach einer Umschaltung in dem Netzwerk (dargestellt in **Fig.2**) wird die Verbindung zwischen Knoten 6 und 5 hergestellt und die Verbindung zwischen den Knoten 5 und 4 unterbrochen. Der Knoten 5 wird somit in die Netzwerkzelle X aufgenommen, die Netzwerkzelle X wächst in die Netzwerkzelle Y.

### Weitere Vorteile:

Die vorstehend beschriebene dynamische Anpassung der einzelnen Netzwerkzellen an sich ändernde Gegebenheiten im Übertragungsmedium erlaubt eine wesentliche Erhöhung der Verfügbarkeit der Komponenten (Knoten bzw. Basisstationen) des Kommunikationsnetzwerkes.

Weiterhin löst der hier vorgestellte Ansatz vorteilhaft das Problem einer erneuten Netzplanung bei irreversiblen oder wiederkehrenden Veränderungen der Topologie des Übertragungsmediums, da sich die Netzwerkzellen (z.B. die Größen der jeweiligen Netzwerkzellen) automatisch an die Veränderungen anpassen.

Durch eine weitreichende Überlappung einzelner Netzwerkzellen und die sich daraus ergebende Redundanz des Netzwerks steigt dessen Verfügbarkeit im Falle einer Überlastung oder bei einem Ausfall einer Basisstation: In einem derartigen Fall unterstützen benachbarte Netzwerkzellen bei einer Umverteilung des Netzwerkverkehrs bzw. übernehmen den Netzwerkverkehr der ausgefallenen Basisstation.

## Patentansprüche

1. Verfahren zur Datenübertragung in einem zellularen Datennetzwerk, wobei das Netzwerk mindestens eine Basisstation (BS0, BS1) und mindestens einen Netzwerkknoten (2..8) umfasst, welche entweder direkt oder über mindestens einen weiteren Netzwerkknoten (2..8) mit einer Basisstation (BS0, BS1) verbunden sind, und bei dem der mindestens eine Netzwerkknoten (2..8) eine Relay-Funktionalität aufweist, und bei welchem die Netzwerktopologie adaptiert wird, indem dynamisch während des Betriebs Netzwerkknoten (2..8) mit einer Basisstation (BS0, Bs1) direkt oder indirekt über mindestens einen weiteren Knoten (2..8) verbunden und/oder getrennt werden,
**dadurch gekennzeichnet, dass**
die Datenübertragung zwischen einzelnen Netzwerkknoten (2..8) untereinander und zwischen einem Netzwerkknoten (2..8) und einer Basisstation (BS0, BS1) über ein Energieversorgungsnetzwerk erfolgt,
dass ein Netzwerkknoten (2..8), der mit einer anderen Basisstation (BS0, BS1)assoziiert ist, zu einer vorherigen Basisstation (BS0, BS1) bzw. zu dessen ursprünglicher Basisstation (BS0, BS1) zurückkehrt, dass bei einem Ausfall einer Verbindung zu einer Basisstation eine Suche nach den Netzknoten (2..8) dieser Basisstation von zumindest einer benachbarten Basisstation gestartet wird, und dass eine koordinierte Übergabe von Netzknoten (2..8) aus einer Netzwerkzelle zu einer anderen Netzwerkzelle mittels eines gezielten An- und Abmeldens gesteuert wird.

2. Verfahren gemäß Anspruch 1, **dadurch gekennzeichnet, dass** als Kriterium zur Verbindung eines bestimmten Netzwerkknotens (2..8) zu einer bestimmten Basisstation (BS0, BS1) oder zu einem bestimmten weiteren Netzwerkknotens (2..8) die über diese Verbindung erzielbare maximale Übertragungsrate herangezogen wird

3. Verfahren gemäß Anspruch 1, **dadurch gekennzeichnet, dass** als Kriterium zur Verbindung eines bestimmten Netzwerkknotens (2..8) zu einer bestimmten Basisstation (BS0, BS1) oder zu einem bestimmten weiteren Netzwerkknotens (2..8) die über diese Verbindung erzielbare Reaktionszeit herangezogen wird.

4. Verfahren nach einem der vorhergehenden Ansprüche,
**dadurch gekennzeichnet, dass** die Basisstation (BS0, BS1) mit einem Backbone-Netzwerk verbunden ist.

5. Verfahren gemäß Anspruch 4, **dadurch gekennzeichnet, dass** bei einem Ausfall der Verbindung zwischen der Basisstation (BS0, BS1) und dem Backbone-Netzwerk die mit der Basisstation (BS0, BS1) assoziierten Netzwerkknoten (2..8) mit einer anderen Basisstation (BS0, BS1) assoziiert werden.

6. Verfahren gemäß Anspruch 4 oder 5, **dadurch gekennzeichnet, dass** bei einem Ausfall der Basisstation (BS0, BS1) die mit der Basisstation (BS0, BS1) assoziierten Netzwerkknoten (2..8) mit einer anderen Basisstation (BS0, BS1) assoziiert werden.

7. Verfahren gemäß einem der vorhergehenden Ansprüche,
**dadurch gekennzeichnet, dass** der mindestens eine Netzwerkknoten (2..8) eine Vermittlungsfunktionalität aufweist derart, dass Daten insbesondere von anderen und/oder über andere Knoten (2..8) zu einer anderen Basisstation (BS0, BS1) als der mit dem mindestens einen Netzwerkknoten (2..8) assoziierten Basisstation (BS0, BS1) weitergeleitet werden und bei dem die Weiterleitung der Daten in einem oder in mehreren logischen und/oder physikalischen Kanälen insbesondere parallel und/oder zeitlich überlappend durchgeführt wird.

8. Verfahren gemäß einem der vorhergehenden Ansprüche,
**dadurch gekennzeichnet, dass** der mindestens eine Netzwerkknoten (2..8) neben der Kommunikation mit der eigenen Basisstation (BS0, BS1) Nachrichten zwischen fremden und/oder benachbarten Basisstationen (BS0, BS1)und den ihr zugeordneten Knoten (2..8) mithört und insbesondere die hieraus gewonnene Information an die eigene Basisstation und/oder an die fremde Basisstation (BS0, BS1) bzw. an die fremden Knoten (2..8) weiterleitet.

9. Verfahren gemäß einem der vorhergehenden Ansprüche,
**dadurch gekennzeichnet, dass** das Netzwerk ein Gleichwellennetz umfasst.

10. Vorrichtung zur Datenübertragung in einem zellularen
Datennetzwerk umfassend eine Prozessoreinheit und/oder eine zumindest teilweise festverdrahtete oder logische Schaltungsanordnung, **dadurch gekennzeichnet, dass** die Vorrichtung eingerichtet ist, ein Verfahren nach einem der vorhergehenden Ansprüche durchzuführen.

11. Vorrichtung gemäß Anspruch 10, **dadurch gekennzeichnet,**
**dass** die Vorrichtung ein Netzwerkknoten eines zellularen Datennetzwerks ist und welcher mit einem weiteren Netzwerkknoten (2..8) Signale über eine Kommunikationsverbindung, die zumindest teilweise ein Stromnetz umfasst, austauscht.

12. System umfassend eine Vorrichtung gemäß einem der Ansprüche 10 oder 11.

## Claims

1. Method for data transmission in a cellular data network,
wherein the network comprises at least one base station (BS0, BS1) and at least one network node (2..8), which are connected either directly or via at least one further network node (2..8) to a base station (BS0, BS1), and in which the at least one network node (2..8) has a relay functionality, and in which the network topology is adapted in that during the operation network nodes (2..8) are dynamically connected to or disconnected from a base station (BS0, BS1) directly or indirectly via at least one further node (2..8),
**characterised in that**
the data transmission between individual network nodes (2..8) and between a network node (2..8) and a base station (BS0, BS1) takes place via a power supply network,
a network node (2..8), which is associated with another base station (BS0, BS1), returns to a previous base station (BS0, BS1) or to its original base station (BS0, BS1), such that in the case of a failure of the connection to a base station at least one adjacent base station begins to search for the network node (2..8) of said base station,
and a coordinated handoff of network nodes (2..8) from one network cell to another network cell is controlled by means of a targeted registering and deregistering.

2. Method according to claim 1, **characterised in that** as a criterion for the connection of a particular network node (2..8) to a particular base station (BS0, BS1) or to a particular further base network node (2..8), the maximum transmission rate achievable via this connection is used.

3. Method according to claim 1, **characterised in that** as a criterion for the connection of a particular network node (2..8) to a particular base station (BS0, BS1) or to a particular further base network node (2..8), the reaction time achievable via this connection is used.

4. Method according to one of the preceding claims, **characterised in that** the base station (BS0, BS1) is connected to a backbone network.

5. Method according to claim 4, **characterised in that** in the case of a failure of the connection between the base station (BS0, BS1) and the backbone network the network nodes (2..8) associated with the base station (BS0, BS1) are associated with another base station (BS0, BS1).

6. Method according to claim 4 or 5, **characterised in that** in the case of a failure of the base station (BS0, BS1) the network nodes (2..8) associated with the base station (BS0, BS1) are associated with another base station (BS0, BS1).

7. Method according to one of the preceding claims, **characterised in that** the at least one network node (2..8) has a switchboard functionality such that data, in particular from other and/or via other nodes (2..8) are forwarded to another base station (BS0, BS1) than the base station (BS0, BS1) associated with the at least one network node (2..8) and in which the forwarding of the data is carried out in one or in a plurality of logical and/or physical channels, in particular in parallel or temporally overlapping.

8. Method according to one of the preceding claims, **characterised in that** the at least one network node (2..8), in addition to the communication with its own base station (BS0, BS1), monitors messages between external and/or adjacent base stations (BS0, BS1) and the nodes (2..8) allocated thereto and in particular forwards the information gained therefrom to its own base station and/or to the external base station (BS0, BS1) or to the external nodes (2..8).

9. Method according to one of the preceding claims, **characterised in that** the network comprises a single-frequency network.

10. Device for data transmission in a cellular data network comprising a processor unit and/or at least one partially hard-wired or logical switching arrangement, **characterised in that** the device is designed to carry out a method according to one of the preceding claims.

11. Device according to claim 10, **characterised in that** the device is a network node of a cellular data network and which exchanges signals with a further network node (2..8) via a communication connection which comprises at least in part a power network.

12. System comprising a device according to one of claims 10 or 11.

## Revendications

1. Procédé de transmission de données dans un réseau de données cellulaire, dans lequel le réseau comprend au moins une station de base (BS0, BS1) et au moins un noeud de réseau (2..8), qui sont reliés à une station de base (BS0, BS1) soit directement soit par l'intermédiaire d'au moins un autre noeud de réseau (2..8) et dans lequel ledit au moins un noeud de réseau (2..8) présente une fonctionnalité de relais et dans lequel la topologie du réseau est adaptée, du fait que, de façon dynamique pendant le fonctionnement, des noeuds de réseau (2..8) sont reliés à une station de base (BS0, BS1) directement ou indirectement par l'intermédiaire d'au moins un autre noeud (2..8) et/ou en sont séparés, **caractérisé en ce que** la transmission de données entre des noeuds de réseau individuels (2..8) entre eux et entre un noeud de réseau (2..8) et une station de base (BS0, BS1) est effectuée par l'intermédiaire d'un réseau de distribution d'énergie, **en ce qu'**un noeud de réseau (2..8), qui est associé à une autre station de base (BS0, BS1), retourne à une station de base antérieure (BS0, BS1) ou à sa station de base initiale (BS0, BS1), **en ce qu'**en cas de panne d'une liaison à une station de base, une recherche des noeuds (2..8) de cette station de base est lancée par au moins une station de base voisine et **en ce qu'**un transfert coordonné de noeuds (2..8) d'une cellule de réseau à une autre cellule de réseau est commandé au moyen d'une demande et d'une clôture ciblées.

2. Procédé selon la revendication 1, **caractérisé en ce que** l'on utilise comme critère pour la liaison d'un noeud de réseau déterminé (2..8) à une station de base déterminée (BS0, BS1) ou à un autre noeud de réseau déterminé (2..8) la vitesse de transmission maximale réalisable par cette liaison.

3. Procédé selon la revendication 1, **caractérisé en ce que** l'on utilise comme critère pour la liaison d'un noeud de réseau déterminé (2..8) à une station de base déterminée (BS0, BS1) ou à un autre noeud de réseau déterminé (2..8) le temps de réaction réalisable par cette liaison.

4. Procédé selon l'une quelconque des revendications précédentes, **caractérisé en ce que** la station de base (BS0, BS1) est reliée à un réseau dorsal.

5. Procédé selon la revendication 4, **caractérisé en ce qu'**en cas de panne de la liaison entre la station de base (BS0, BS1) et le réseau dorsal, les noeuds de réseau (2..8) associés à la station de base (BS0, BS1) sont associés à une autre station de base (BS0, BS1).

6. Procédé selon la revendication 4 ou 5, **caractérisé en ce que**, en cas de panne de la station de base (BS0, BS1), les noeuds de réseau (2..8) associés à la station de base (BS0, BS1) sont associés à une autre station de base (BS0, BS1).

7. Procédé selon l'une quelconque des revendications précédentes, **caractérisé en ce que** ledit au moins un noeud de réseau (2..8) présente une fonctionnalité de commutation, de telle manière que des données soient retransmises en particulier à partir d'autres noeuds (2..8) et/ou via d'autres noeuds (2..8) à une autre station de base (BS0, BS1) qu'à la station de base (BS0, BS1) associée audit au moins un noeud de réseau (2..8) et dans lequel la retransmission des données est effectuée dans un ou dans plusieurs canaux logiques et/ou physiques, en particulier en parallèle et/ou avec un recouvrement temporel.

8. Procédé selon l'une quelconque des revendications précédentes, **caractérisé en ce que** ledit au moins un noeud de réseau (2..8), en plus de la communication avec la station de base propre (BS0, BS1), surveille des messages entre des stations de base extérieures et/ou proches (BS0, BS1) et les noeuds (2 ... 8) qui leur sont associés et il retransmet en particulier les informations recueillies à partir de ceux-là à la station de base propre et/ou à la station de base extérieure (BS0, BS1) resp. aux noeuds extérieurs (2..8).

9. Procédé selon l'une quelconque des revendications précédentes, **caractérisé en ce que** le réseau comprend un réseau à fréquence commune.

10. Dispositif pour la transmission de données dans un réseau de données cellulaire comprenant une unité de processeur et/ou un circuit au moins partiellement câblé ou logique, **caractérisé en ce que** le dispositif est conçu pour exécuter un procédé selon l'une quelconque des revendications précédentes.

11. Dispositif selon la revendication 10, **caractérisé en ce que** le dispositif est un noeud de réseau d'un réseau de données cellulaire et qui échange des signaux avec un autre noeud de réseau (2..8) via une liaison de communication qui comprend au moins partiellement un réseau de courant.

12. Système comportant un dispositif selon l'une des revendications 10 ou 11.
